# EUROPÄISCHE PATENTSCHRIFT

(11) **EP 2 758 872 B1**
(45) Veröffentlichungstag und Bekanntmachung des Hinweises auf die Patenterteilung: **30.12.2015**
(21) Anmeldenummer: 12775452.1
(22) Anmeldetag: 19.09.2012
(51) Int. Cl.: G05B 19/042, G06F 9/44

(54) **VERFAHREN ZUR GENERIERUNG UND HANDHABUNG VON APPLIKATIONEN FÜR KOMPONENTEN EINES VERTEILTEN STEUERUNGSSYSTEMS SOWIE ENGINEERING-SYSTEM ZUR DURCHFÜHRUNG DES VERFAHRENS**
METHOD FOR GENERATING AND HANDLING APPLICATIONS FOR COMPONENTS OF A DISTRIBUTED CONTROL SYSTEM AND ENGINEERING SYSTEM FOR IMPLEMENTING THE PROCESS
PROCÉDÉ POUR GÉNÉRER ET FAIRE FONCTIONNER DES APPLICATIONS POUR DES COMPOSANTS D'UN SYSTÈME DE COMMANDE RÉPARTI, ET SYSTÈME D'INGÉNIERIE POUR LA MISE EN OEUVRE DE CE PROCÉDÉ

(30) Priorität: 19.09.2011 DE 102011053757
(43) Veröffentlichungstag der Anmeldung: 30.07.2014
(73) Patentinhaber: Schneider Electric Automation GmbH, 97828 Marktheidenfeld (DE)
(72) Erfinder: NEUBERT, Ralf, 63739 Aschaffenburg (DE); WENZEL, Karl-Heinz, 63843 Niedernberg (DE)
(74) Vertreter: Stoffregen, Hans-Herbert
(86) Internationale Anmeldenummer: PCT/EP2012/068471
(87) Internationale Veröffentlichungsnummer: WO 2013/041590

(56) Entgegenhaltungen:
- REUTER T ET AL: "PROJEKTIEREN LOEST DAS PROGRAMMIEREN AB", ELEKTRONIK, IRL PRESS LIMITED, DE, Bd. 46, Nr. 3, 4. Februar 1997 (1997-02-04), Seiten 58-64, XP000722490, ISSN: 0013-5658
- WECK M ET AL: "ABTEILUNGSUEBERGREIFENDES PROJEKTIEREN KOMPLEXER MASCHINEN UND ANLAGEN. ÖMETHODIK UND SYSTEMKONZEPT ZUR VERBESSERUNG DER ZUSAMMENARBEIT", VDI Z, SPRINGER VDI VERLAG, DE, Bd. 137, Nr. 10, 1. Oktober 1995 (1995-10-01), Seiten 54,57-60, XP000535816, ISSN: 0042-1766

## Beschreibung

Die Erfindung bezieht sich auf ein Verfahren zur Generierung und Handhabung von Komponenten-Applikationen für physische Komponenten eines Steuerungssystems nach dem Oberbegriff des Anspruchs 1 sowie auf ein Engineering-System nach dem Oberbegriff des Anspruchs 15.

In dem Aufsatz Reuter T. et al. "Projektieren löst das Programmieren ab", ELEKTRONIK 3/1997, S- 58 - 64 ist ein Verfahren zur Generierung und Handhabung von Komponenten-Applikationen für physische Komponenten eines Steuerungssystems sowie ein Engineering-System zur Durchführung des Verfahrens beschrieben. Das Verfahren umfasst das Bereitstellen von Komponenten-Funktionen in Form von Objekttypen aus in einer Bibliothek gespeicherten Komponenten-Modellen bzw. Funktions-Modellen mit definierten Referenzen und Parametersätzen für die zu verwendenden Komponenten-Funktionen sowie deren Kommunikation, Logik und Variablen sowie die Auswahl von für eine Gesamt-Applikation spezifischen Komponenten-Funktionen. Dabei ist vorgesehen, dass die für die Generierung einer Komponenten-Applikation notwendigen Instanzen lokal auf einer einzigen Ressource, wie einem Server, implementiert sind, so dass die Ressource bei Generierung einer Gesamt-Applikation eines eine Vielzahl von Komponenten aufweisenden Steuerungssystems stark belastet ist.

Ein Aufsatz von M. Weck. u. a.: "Abteilungsübergreifendes Projektieren komplexer Maschinen und Anlagern", VDI-Z 137 (1995), Nr. 10, S. 56 - 60 bezieht sich auf ein Informationskonzept, bei dem mit Hilfe eines dynamischen Pflichtenhefts die abteilungsübergreifende Informationserstellung und -verwaltung systematisiert und somit die Zusammenarbeit der Fachabteilungen während aller Phasen der Auftragsabwicklung wirkungsvoll unterstützt werden kann. In diesem Zusammenhang wird ein Projektierungssystem vorgeschlagen, das eine durchgängige, bereichsüberreifende Informationserstellung und -verwaltung im Sinne eines Computer Integrated Engineering (CIE) möglich machen soll und die die abteilungsübergreifende Zusammenarbeit während ihrer Entwicklungsphasen - von der Angebotserstellung bis hin zur Erarbeitung der Maschinendokumentation - unterstützen soll.

Üblicherweise erfolgt die Generierung einer Applikation, wie z. B. einer Steuerungs-Logik und Konfigurationsdaten umfassenden Steuerungs-Applikation zentral auf einer Arbeitsstation wie Personal-Computer. Dies gilt auch dann, wenn die Planung und der Entwurf einer Applikation wie Steuerungs-Applikation auf mehreren Arbeitsstationen verteilt durchgeführt wurden.

Die resultierende Applikation wird sodann durch die zentrale Arbeitsstation generiert. Aufgrund der Notwendigkeit der Projektierung der auszutauschenden Datenmengen, deren Relation untereinander wie z. B. Handhabung von Cross-Referenzen sowie der Anzahl von notwendigen Kommunikationspfaden für Daten und der Verteilung der gesamten Systemkonfiguration und Logik auf die zugehörigen physischen Steuerungssystemkomponenten wie z. B. PLC (Programmable Logic Control), HMI (Human Machine Interface) und SCADA (Supervisory Control and Data Aquisition), hat das bekannte Verfahren bzw. System nur eine geringe Leistungsfähigkeit, Skalierbarkeit und Ausfallsicherheit, sobald die zentrale Arbeitsstation gestört oder eingeschränkt zugreitbar ist.

Ein derartiges Verfahren ist beispielsweise in der EP 2 360 542 A1 beschrieben, die sich auf ein Verfahren zum Projektieren eines auf einem Bedien- und Beobachtungsgerät darstellbaren Prozessbild mittels eines Engineering-Systems bezieht. Dabei umfasst das Prozessbild mehrere Bildobjekte, die Komponenten eines zu steuernden technischen Prozesses repräsentieren und die mittels einer Projektierungs-Software des Engineering-Systems aus Instanzen erzeugt werden, welche mittels der Projektierungs-Software jeweils durch Instanziierung eines Typs gebildet werden. Durch geeignete Maßnahme kann eine eindeutige Zuordnung eines Bildobjektes zu einer Komponenten ermöglicht werden. Das Verfahren wird jedoch auf einem zentralen Engineering-System ausgeführt.

Davon ausgehend liegt der vorliegenden Erfindung die Aufgabe zu Grunde, ein Verfahren und ein System der eingangs genannten Art derart weiterzubilden, dass die Leistungsfähigkeit der Generierung und Handhabung von Applikationen für Komponenten eines verteilten Steuerungssystems verbessert wird.

Die Aufgabe wird erfindungsgemäß durch die Merkmale des Anspruchs 1 gelöst.

Gemäß einer bevorzugten Verfahrensweise ist vorgesehen, dass die Interaktion zwischen den Repräsentanten sowie zwischen den Repräsentanten und den zugehörigen physikalischen Komponenten durch Service-Level-Agreements (SLAs) gesteuert wird.

Somit besteht die Möglichkeit, dass die Interaktion zwischen den Repräsentanten sowie zwischen den Repräsentanten und den zugehörigen physischen Komponenten durch die Service-Level-Agreements aktivierbar oder deaktivierbar ist.

Auch die Generierung der Komponenten-Applikationen ist in einem Repräsentanten durch Service-Level-Agreements aktivierbar oder deaktivierbar.

Des Weiteren zeichnet sich die Erfindung dadurch aus, dass die Generierung einer Komponenten-Applikation innerhalb des zugehörigen Repräsentanten durch ein Service-Level-Agreement überprüft wird oder überprüft werden kann.

Über die Service-Level-Agreements wird weiterhin die Möglichkeit eröffnet, dass die Generierung der Komponenten-Applikationen bezogen auf die physische Komponente oder die Übertragung von generierten Daten auf die physische Komponente überprüft werden kann.

Vorzugsweise umfasst die Interaktion zwischen den Repräsentanten die Definition und den Vergleich von Parametern, den Entwurf von Steuerungs-Strategien sowie die Visualisierung von Steuerungs-Logik.

Eine weitere bevorzugte Ausführungsform des Verfahrens zeichnet sich dadurch aus, dass die Nutzung der generierten Komponenten-Applikationen durch Vergabe von Nutzerrechten bezüglich Funktionsumfang und Datenzugriff gesteuert wird.

Die generierten Komponenten-Applikationen können unter Berücksichtigung der Service-Level-Agreements mittels der physischen Komponente in Form der Steuerungs-Überwachungs- und Datenerfassungs-Einheit auf die weiteren Komponenten des Steuerungssystems verteilt werden.

Vorzugsweise umfasst die Generierung einer Komponenten-Applikation folgende Verfahrensschritte:
- Anfrage/Überprüfung eines Service-Level-Agreements zur Generierung einer Komponenten-Applikation zwischen den Repräsentanten,
- Interaktion zwischen den Repräsentanten auf Basis von Web-Services,
- Generierung einer Komponenten-Applikation in dem Repräsentanten, wobei die Generierung durch eine interne Service-Level-Agreement-Einheit des jeweiligen Repräsentanten überprüft wird,
- Verteilung der Komponenten-Applikation auf die zugeordnete physische Komponente, wobei zuvor gegebenenfalls durch die Service-Level-Agreement-Einheit eine Überprüfung durchgeführt wird.

Zusammenfassend zeichnet sich die Erfindung durch folgende Merkmale aus:
- die Generierung von Applikationen wird auf verschiedene Komponenten einer cloud-basierten Umgebung verteilt,
- die verteilte Generierung erfolgt über die cloud-basierte Umgebung,
- die cloud-basierte Infrastruktur hosted Repräsentanten wie Software-Tools der physischen Komponenten, durch die die zugehörigen physischen Komponenten des zu generierenden Steuerungssystems wie PLC, HMI, SCADA repräsentiert werden,
- die verteilte Generierung der spezifischen Applikationen wie Steuerungs-Applikation, HMI-Applikation, SCADA-Applikation wird durch eine Interaktion der Repräsentanten ausgeführt,
- die verteilte Generierung der spezifischen Applikationen bzw. Teil-Applikationen ist mit spezifischen Service-Level-Agreements (SLAs) verknüpft,
- jede Generierung einer spezifischen Applikation wird durch ein vorgegebenes Service-Level-Agreement gesteuert wie z.B. aktiviert oder deaktiviert,
- jede Generierung einer spezifischen Applikation innerhalb der hostenden cloud-basierten Umgebung wird durch ein Service-Level-Agreement überprüft und
- jede spezifische Generierung bezogen auf eine physische Komponente wie z.B. PLC oder die Übertragung von generierten Daten auf diese physische Komponente wird durch ein Service-Level-Agreement überprüft.

Gegenüber dem Stand der Technik wird eine höhere Leistungsfähigkeit, Skalierbarkeit und Verfügbarkeit erreicht; insbesondere wird die Zeit zur Generierung oder zum Aktualisieren von Konfigurations- und / oder Anwendungsdaten und zur Verteilung dieser Daten auf die zugehörigen physischen Komponenten des Systems reduziert. Dies wird durch die Verlagerung der ehemals zentralisierten Generierung von Applikationen für PLCs, HMIs, SCADAs in verteilte Repräsentanten, welche über die cloud-basierte Umgebung interagieren, erreicht. Durch die Steuerung der Kommunikation zwischen den Repräsentanten untereinander und/oder zwischen den Repräsentanten und den physischen Komponenten mittels Servic-e-Level-Agreements wird eine Service-Level-Agreement-Management-Fähigkeit während der Planungs- und Entwurfs-Phase, der Inbetriebnahme-Phase und/oder der Ausführungsphase zur Verfügung gestellt.

Aufgrund der cloud-basierten Infrastruktur wird eine verbesserte Skalierbarkeit des Systems erreicht.

Eine Weiterbildung zeichnet sich dadurch aus, dass die Komponenten-Funktionen in Form von Objekttypen aus in einer Bibliothek gespeicherten Komponenten-Modellen bzw. Funktionsmodellen unter Verwendung von definierten Referenzen und Parametersätzen für die zu verwendenden Komponenten-Funktionen, deren Kommunikation. Logik und Variablen für definierte Teilnehmer erzeugt werden.

Die für eine Gesamtapplikation spezifischen Komponenten-Funktionen werden identifiziert und aus den ausgewählten Komponenten-Funktionen werden nach einer Verifizierung der zu Grunde liegenden Funktionsumfänge die Instanzen erzeugt. Ferner erfolgt eine Übergabe notwendiger Parameter einschließlich der für die Generierung der Komponenten-Applikationen relevanten Funktions-Umfangs-Parameter.

Die Instanzen werden mittels einer Ressourcen-Verwaltung auf Komponenten der cloud-basierten Umgebung verteilt und auf untergelagerte Ressourcen wie Server zur Ausführung der jeweiligen Instanzen implementiert.

Die Komponenten-Applikationen werden innerhalb einer Instanz eines Repräsentanten durch Objekt-Repräsentanten generiert, wobei eine Kommunikations-Parameter-Generierungseinheit zur Generierung von Kommunikations-Parametern, eine Applikations-Logik-Generierungseinheit zur Generierung von Applikations-Logik und/oder eine Konfigurations-Informations-Generierungseinheit zur Generierung von Konfigurations-Informationen vorgesehen ist.

Die Kommunikations-Parameter repräsentieren vorzugsweise eine Variable, eine Baudrate oder einen Speicherplatz. Die Applikations-Logik kann einen FunktionsBaustein, eine Eingangsvariable, einen Speicherplatz und/oder eine Ausgangsvariable und die Konfigurations-Information eine Farbe für einen Hintergrund oder eine Menüsprache darstellen.

Es ist vorzugsweise vorgesehen, dass die Service-Level-Agreements für das Generieren der Komponenten-Applikation in einer Service-Level-Applikations-Einheit der Instanz des Repräsentanten definiert und überprüft werden.

Dabei steuert die Service-Level-Agreement-Einheit die Interaktion der Objekt-Repräsentanten innerhalb des Repräsentanten sowie die Interaktion mit anderen Repräsentanten und/oder die Verteilung der generierten Komponenten-Applikation.

Das Verfahren zeichnet sich des weiteren dadurch aus, dass die Kommunikation über eine Schnittstelle über einen einheitlichen Indikator für Ressourcen (uniform resource identifier) erfolgt, der aus einer Zeichenfolge besteht, die zur Adressierung/Identifikation einer abstrakten oder physischen Ressource dient.

Des Weiteren bezieht sich die Erfindung auf ein Engineering-System nach dem Oberbegriff des Anspruchs 15.

Das Engineering-System löst die Aufgabe durch die Merkmale des Anspruchs 15.

Durch die Verteilung der Instanzen auf Ressourcen einer cloud-basierten Umgebung wird anstelle einer sequentiellen Verarbeitung eine parallele Verarbeitung erreicht.

Zur benutzerdefinierten oder lizenzbasierten Steuerung der Generierung weist die Instanz des Repräsentanten eine Service-Level-Applikations-Einheit auf, in der Service-Level-Agreements für das Generieren der Komponenten-Applikation definiert und überprüft werden.

Des Weiteren ist vorgesehen, dass die Objekt-Repräsentanten Schnittstellen zur Kommunikation über einen einheitlichen Identifikator für Ressourcen (uniform resource identifier) aufweisen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:
- Fig. 1: eine schematische Darstellung eines Engineering-Systems zur Projektierung und Ablage von für eine verteilte Generierung von Applikationen notwendigen Daten sowie zur Definition kundenspezifischer oder lizenzbasierter Funktionsumfänge als Service-Level-Agreement,
- Fig. 2: Verfahrensschritte zur Erzeugung von Instanzen eines Repräsentanten einer Komponenten-Funktion,
- Fig. 3: Verfahrensschritte zur Verteilung der Instanzen auf Ressourcen einer cloud-basierten Umgebung,
- Fig. 4: eine schematische Darstellung eines Steuerungssystems und dessen Repräsentanten in einer cloud-basierten Umgebung,
- Fig. 5: eine schematische Darstellung der verteilten Generierung einer Steuerungs-Applikation,
- Fig. 6: eine schematische Darstellung der Implementierung eines Repräsentanten bzw. eines Objektes in der cloud-basierten Umgebung,
- Fig. 7: eine schematische Darstellung der Kommunikation zwischen Repräsentanten bzw. Objekten und
- Fig. 8: eine schematische Darstellung der Definition und des Aufrufs von Service-Level-Agreements (SLAs).

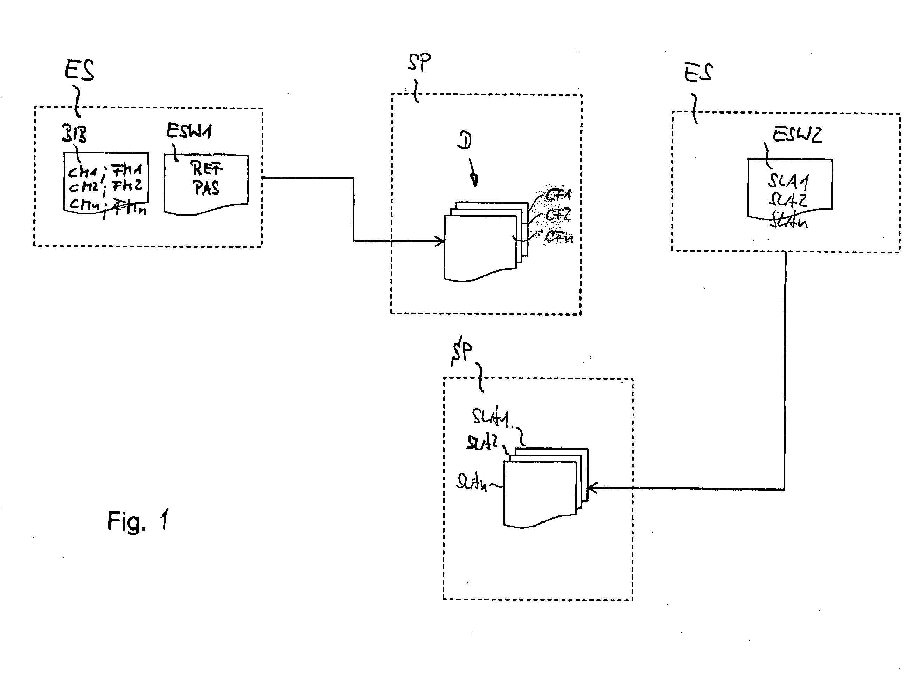

Fig. 1 zeigt rein schematisch eine schematische Darstellung eines Engineering-System ES mit einer Bibliothek BIB, in der Komponenten-Modelle CM1, CM2... CMn von Komponenten C1, C2...Cn oder Funktions-Modelle FM1, FM2...FMn eines zu projektierenden Steuerungssystems CS abgelegt sind. Die Komponenten-Modelle CM1, CM2 ... CMn oder Funktions-Modelle FM1, FM2...FMn beschreiben beispielsweise eine Logik und/oder eine Kommunikation einer speicherprogrammierbaren Steuerung SPS, Funktionen eines HMI (Human Machine Interface) oder Funktionen einer Steuerungs-Überwachungs- und Datenerfassungseinheit (Supervisory Control and Data Aquisition) (SCADA)). Die Komponenten-Modelle CM1, CM2...CMn oder Funktions-Modelle FM1, FM2...FMn können Funktionsbausteine, Kommunikationsparameter oder Bildbeschreibungen repräsentieren.

Ferner umfasst des Engineering-System ES eine Engineerings-Software ESW1, mittels der die Referenzen REF und Parametersätze PAS für die zu verwendenden Komponentenfunktionen, deren Kommunikation, Logik und Variablen für die Komponenten C1, C2...Cn wie SPS, HMI oder SCADA definiert werden.

Die für die Generierung von Komponenten-Applikationen CA1, CA2...CAn der Gesamtapplikation notwendigen Daten D werden in einem Speicher SP als Komponenten-Funktionen CF1, CF2...CFn in Form von Objekttypen abgelegt. Beispiele für Komponenten-Funktionen sind die Steuerungslogik für eine Funktion "Motor EIN/AUS" sowie die Visualisierung der Funktion "Motor EIN/AUS".

Des Weiteren umfasst das Engineering-System ES eine Engineering-Software ESW2 zur Projektierung bzw. Beschreibung von kundenspezifischen oder lizenzbasierten Funktionsumfängen in Form von Service-Level-Agreements SLA1, SLA2....SLAn, die mit zugehörigen Parametern in dem Speicher SP abgelegt werden.

Die Funktionsumfänge gemäß SLA1, SLA2...SLAn definieren beispielsweise die Anzahl und/oder Nutzungsart der Komponenten C1....Cn oder Komponenten-Funktionen CF1...CFn, die von einem Benutzer verwendet werden dürfen.

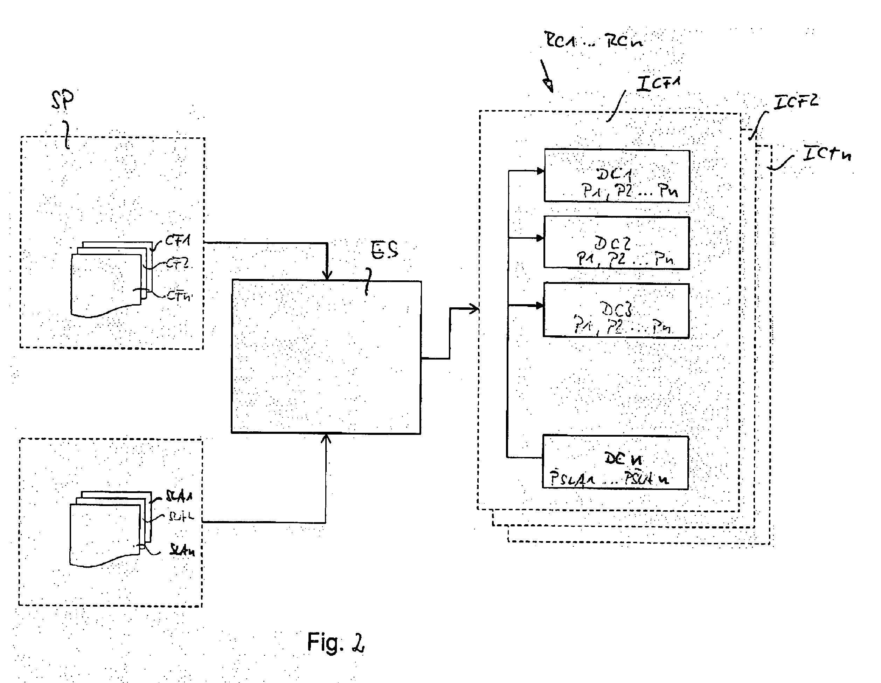

Fig. 2 zeigt rein schematisch Verfahrensschritte zur Erzeugung von Repräsentanten RC1, RC2...RCn der Komponenten C1, C2 ...Cn bzw. der Komponenten-Funktionen CF1, CF2...CFn als Instanzen ICF1, ICF2...ICFn der Komponenten C1...Cn oder Komponenten-Funktionen CF1...CFn.

Dabei erfolgt eine Identifizierung der gesamtapplikations-spezifischen Instanzen ICF1, ICF2...ICFn, die die darin projektierten Funktionen CF1, CF2....CFn repräsentieren. Jede der Instanzen ICF1, ICF2...ICFn weist ein oder mehrere Datencontainer DC1, DC2...DCn als aktive Software-Module auf, in denen jeweils Kommunikations-Daten, Logik-Daten, Konfigurations-Daten und/oder Funktions-Umfangs-Daten entsprechend der Instanziierung abgelegt und verarbeitet werden.

Vor Erzeugung der Instanzen ICF1, ICF2...ICFn erfolgt eine Verifizierung der zugrundegelegten Service-Level-Agreements SLA1, SLA2...SLAn, wobei überprüft wird, ob die zu erzeugende Instanz erlaubt ist bzw. ob notwendige Teilfunktionen wie Logik-Funktionen oder Kommunikations-Funktionen konform zu dem jeweiligen kundenspezifischen oder lizenzbasierten Funktionsumfang sind.

In dem Engineering-System ES werden die Instanzen ICF1, ICF2...ICFn erzeugt und notwendige Parameter P1, P2...Pn zur Generierung von Komponenten-Applikationen CA1, CA2...CAn einschließlich der für die Generierung von Teilapplikationen relevanten Funktions-Umfangs-Parameter PSLA1, PSLA2...PSLAn übergeben.

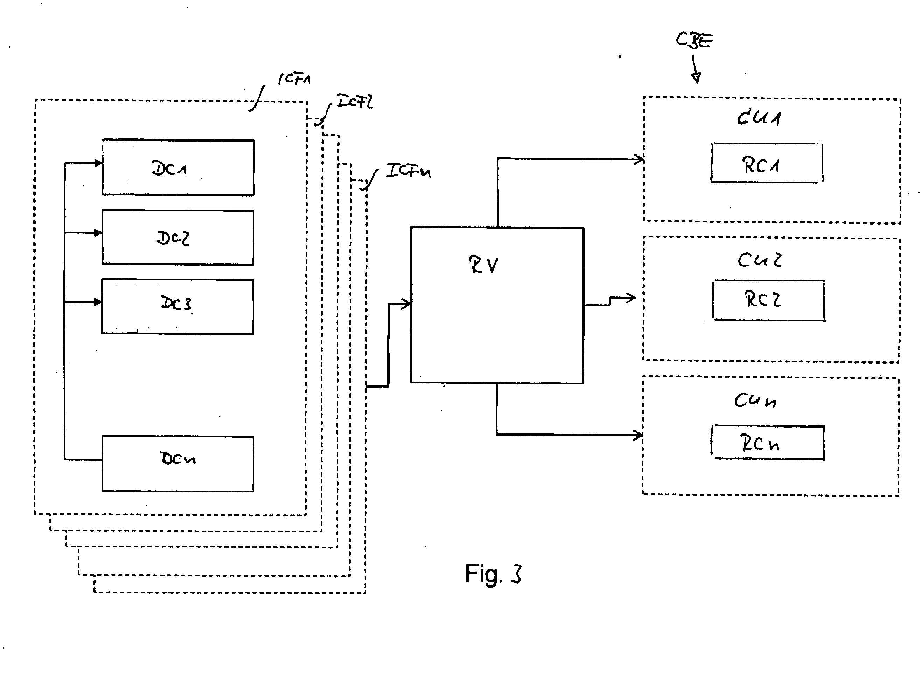

Fig. 3 zeigt rein schematisch die Verteilung der Instanzen ICF1, ICF2...ICFn auf Ressourcen CU1, CU2...CUn einer cloud-basierten Umgebung CBE. Die Verteilung erfolgt in an sich bekannter Weise über eine Ressourcen-Verwaltung RV für cloud-basierte Umgebungen. Dazu werden die Instanzen ICF1, ICF2...ICFn an die Ressourcen-Verwaltung RV der cloud-basierten Umgebung CBE übergeben und in die entsprechenden Ressourcen CU1, CU2 ... CUn, wie beispielsweise Server zur Ausführung der jeweiligen Instanzen ICF1, ICF2....ICFn übertragen. Die Instanzen werden als Repräsentanten RC1, RC2...RCn der Komponenten C1, C2...Cn bzw. Komponenten-Funktionen CF1, CF2...CFn ausgeführt.

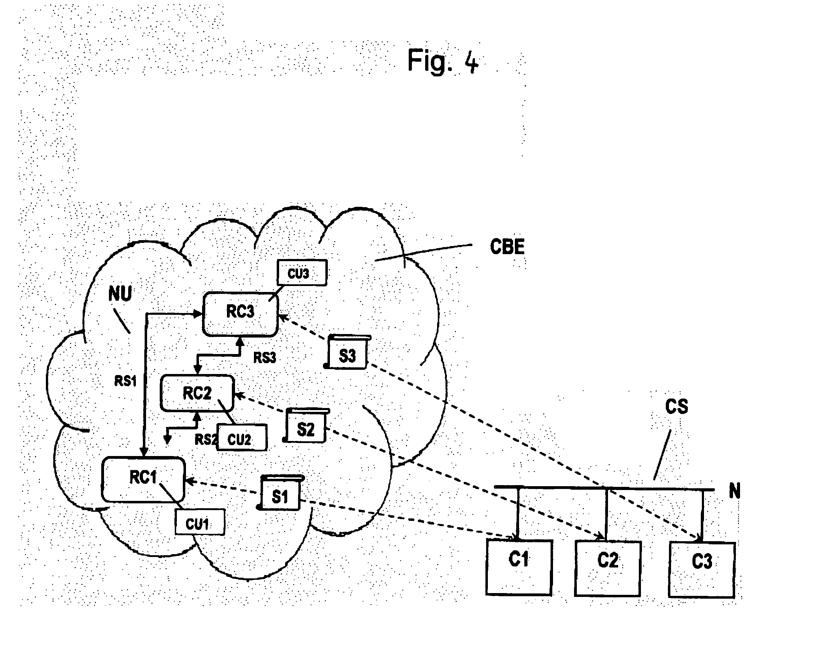

Fig. 4 zeigt schematisch das Steuerungssystem CS, umfassend ein Netzwerk N zur Verbindung der Komponenten C1, C2...Cn des Steuerungssystems zum Datenaustausch. Die Komponenten C1, C2...Cn können als programmierbare Logik-Controller (Programmable Logic Controller (PLC)), Mensch-Maschine-Interface (Human Machine Interface (HMI)), und/oder Steuerungs-Überwachungs- und Datenerfassungs-Einheit (Supervisory Control and Data Aquisition (SCADA)) ausgebildet sein. Die Komponenten C1...Cn können Ein-/Ausgänge zur Steuerung von Aktoren, wie Motoren, oder zur Erfassung von Sensoren, wie Endschalter oder RFID aufweisen.

Jede physische Komponente C1, C3...Cn des Steuerungssystems CS oder Komponenten-Funktion CF1...CFn ist in der cloud-basierten Umgebung CBE durch die Instanz des Repräsentanten RC1, RC1, RC3 repräsentiert. Die Instanzen der Repräsentanten RC1, RC2, RC3 in Form von Software-Bausteinen werden auf Hardware-Komponenten CU1, CU2, CU3 der cloud-basierten Umgebung gehostet. Mittels Interaktion zwischen den verteilten Repräsentanten innerhalb der cloud-basierten Umgebung CBE erfolgt eine verteilte Generierung von Komponenten-Applikationen CA1, CA2, CA3 wie PLC- bzw. Steuerungs-Applikation CA1, HMI-Applikation CA2 sowie SCADA-Applikation CA3 für die zugehörigen Komponenten C1, C2, C3.

Sowohl die Kommunikation zwischen den Repräsentanten RC1, RC2, RC3 zur Generierung der Applikationen CA1, CA2, CA3 als auch die Kommunikation der Repräsentanten RC1, RC2, RC3 mit den zugehörigen physischen Komponenten C1, C2, C3 kann über die dezidierten Service-Level-Agreements SLA1, SLA2, SLA3 gesteuert werden.

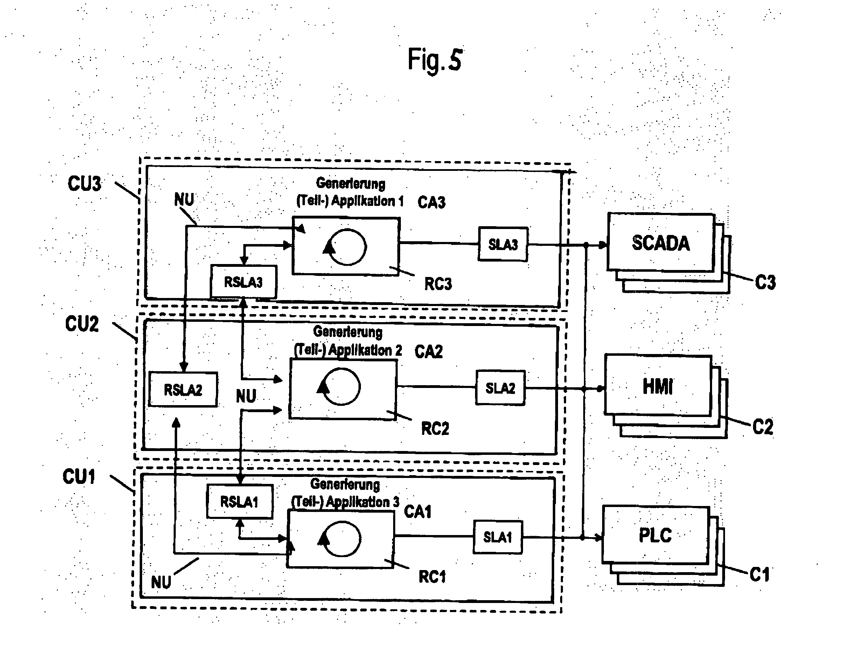

Fig. 5 zeigt rein schematisch die verteilte Generierung der Applikationen CA1, CA2, CA3 am Beispiel der in der cloud-basierten Umgebung CBE gehosteten Repräsentanten RC1, RC2, RC3.

Die cloud-basierte Umgebung CBE kann als Verbund räumlich verteilter Computereinheiten CU1, CU2, CU3 interpretiert werden, die über ein Netzwerk NU kommunizieren können.

Die Computereinheiten CU1, CU2, CU3 hosten die Repräsentanten RC1, RC2, RC3 der Komponenten C1, C2, C3 in Form von entsprechenden Software-Tools.

Durch Interaktion der Komponenten C1, C2, C3 mit den jeweiligen Repräsentanten RC1, RC2, RC3 sowie durch Interaktion zwischen den Repräsentanten RC1, RC2, RC3 über das Netzwerk NU der cloud-basierten Umgebung CBE werden in den Repräsentanten RC1, RC2,RC3 die Applikationen CA1, CA2, CA3 generiert, wobei die Teil-Applikation CA1 z.B. die Funktion "Transportieren", die Teil-Applikation CA2 z.B. die Funktion "Senden" und Teil-Applikation CA3 z.B. die Funktion "Heben" beschreibt.

Der Transfer der Applikationen CA1, CA2, CA3 zu den physischen Komponenten C1, C2, C3 sowie die Kommunikation zwischen den Repräsentanten RC1, RC2, RC3 zur Generierung der Applikationen CA1, CA2, CA3 wird über die spezifischen Service-Level-Agreements SLA1, SLA2, SLA3 bzw. RSLA1, RSLA2, RSLA3 gesteuert. Ferner besteht die Möglichkeit, die generierten Applikationen CA1, CA2, CA3 unter Berücksichtigung des Service-Level-Agreements SLA3 mittels der physischen Komponente C3 wie SCADA zu verteilen.

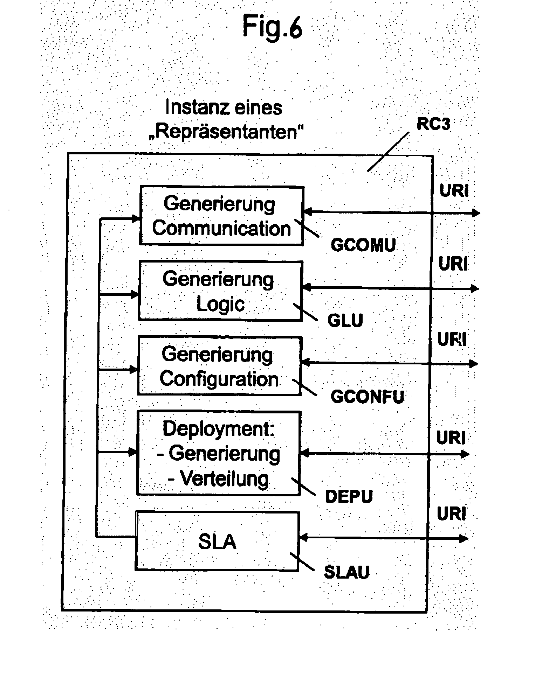

Fig. 6 zeigt rein schematisch eine Instanz des Repräsentanten RC3 und dessen Implementierung in der cloud-basierten Umgebung CBE.

Gemäß Fig. 6 umfasst die Instanz des Repräsentanten die Daten-Container als Objekt-Repräsentanten wie eine Kommunikations-Parameter-Generierungseinheit GCOMU zur Generierung von Kommunikations-Parametern, z. B. zwischen speicherprogrammierbaren Steuerungen SPS1<-> SPS2 eine Variable xy, eine Baudrate und/oder einen Speicherplatz, eine Applikations-Logik-Generierungseinheit GLU zur Generierung von Applikations-Logik wie ein Funktionsbaustein "DF3_MOVE_UP"; eine Eingangsvariable "Variable xy", einen Speicherplatz und/oder Ausgangsvariablen sowie eine Konfigurations-Informations-Generierungseinheit GCONFU zur Generierung von Konfigurations-Information wie Farbe für Hintergrund sowie eine Verteilungseinheit DEPU zur Verteilung der generierten Information zu den physischen Komponenten C1, C2, C3.

Ferner ist eine Service-Level-Applikations-Einheit SLAU vorgesehen, in der Service-Level-Agreements für das Generieren der Steuerungs-Applikation CA definiert und überprüft werden. Die Service-Level-Agreement-Einheit SLAU steuert die Interaktion der Objekt-Repräsentanten GCOMU, GLU, GCONFU, DEPU und SLAU innerhalb des Repräsentanten sowie die Interaktion mit anderen Repräsentanten RC1, RC2 sowie die Verteilung der generierten Teil-Applikationen. Über die Service-Level-Agreement-Einheit SLAU wird somit die Interaktion innerhalb des Repräsentanten bzw. des Objekts RC1, RC2, RC3 und/oder außerhalb zu den physischen Komponenten C1, C2, C3 definiert und geprüft.

Die Kommunikation erfolgt über eine Schnittstelle über einen einheitlichen Identifikator für Ressourcen URI (Uniform Ressource Identifier), der aus einer Zeichenfolge besteht, die zur Adressierung / Identifikation einer abstrakten oder physischen Ressource dient. URIs werden hier zur Bezeichnung von Web-Service Endpunkten eingesetzt.

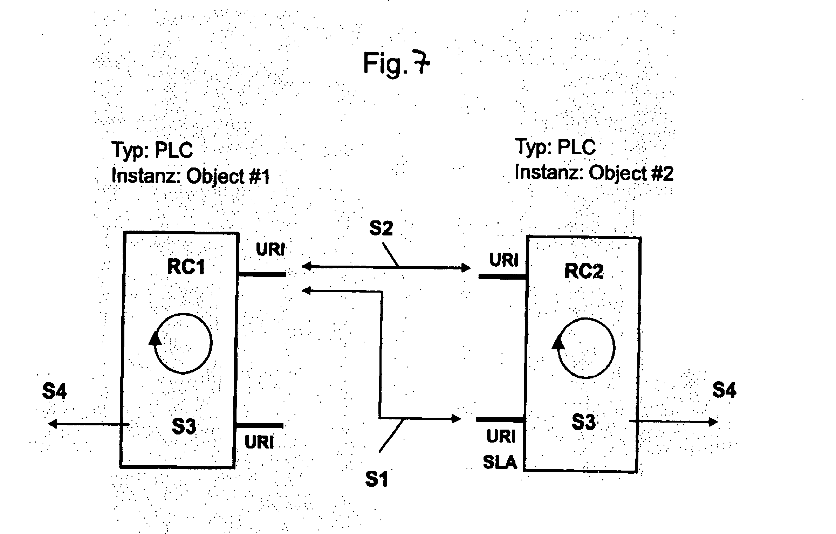

Fig. 7 zeigt rein schematisch eine Kommunikation zwischen den Repräsentanten bzw. Objekten RC1 und RC2 bei der verteilten Generierung einer Steuerungs-Applikation. In einem ersten Schritt S1 erfolgt eine Anfrage/Überprüfung eines Service-Level-Agreements SLA1 für die Generierung einer Steuerungs-Applikation zwischen den Objekten RC1, RC2. Sofern die individuelle Generierung erlaubt ist, erfolgt in einem Schritt S2 eine Interaktion zwischen den Repräsentanten bzw. Objekten RC1, RC2 auf Basis von Web-Services. Sodann wird in einem Schritt S3 jeweils eine interne Abarbeitung in Form einer Generierung einer Teil-Applikation durchgeführt, wobei die Generierung durch die interne Service-Level-Agreement-Einheit SLAU des jeweiligen Objektes/Repräsentanten RC1 bzw. RC2 überprüft wird.

Zur weiteren Generierung im Schritt S3 werden die durch die interne Service-Level-Agreement-Einheit SLAU nun authorisierten und freigegebenen Daten aus der Interaktion zwischen RC1 und RC2 mit den gem. Fig.1 bzw. 2 projektierten Daten D bearbeitet und die für die jeweiligen physischen Komponenten C1 ... Cn notwendigen, ablauffähigen Applikationsanteile, z.B. für eine SPS eine Programm-Sektion nach Standard IEC 61131-3, mit entsprechenden Funktionsbausteinen und deren spezifischen Parametern erzeugt, die dann im Schritt S4 verteilt werden. Dabei werden die projektierten Daten und die durch Interaktion im Schritt S2 gewonnenen Informationen benutzt, um ablauffähige, für die Ziel-Komponente angepasste Programmteile zu kompilieren.

Nach Abschluss der Generierung der Teil-Applikationen erfolgt sodann im Schritt S4 eine Verteilung der Applikationen CA1, CA2, CA3 zu den physischen Komponenten C1, C2, C3, wobei zuvor durch die Service-Level-Agreement-Einheit SLAU eine SLA-Prüfung durchgeführt wird.

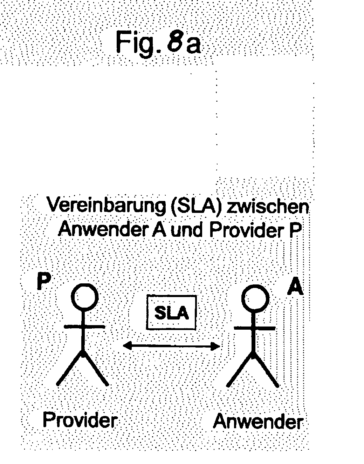

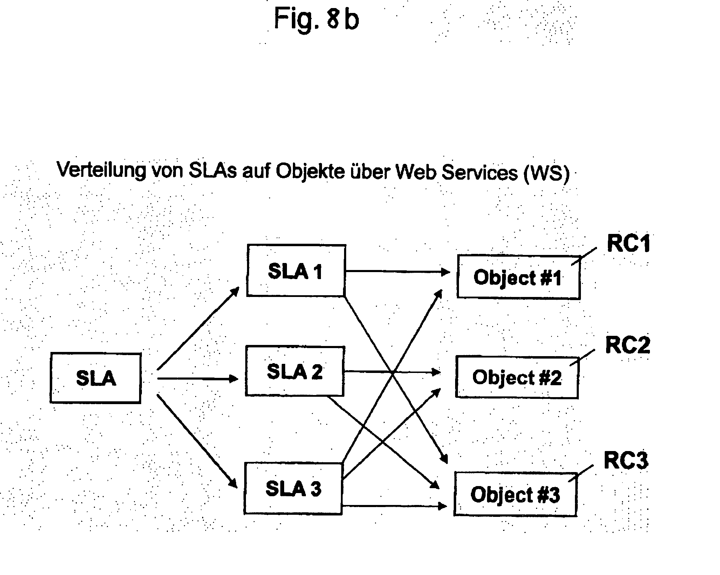

Die Definition und der Aufruf von Service-Level-Agreements SLA1, SLA2, SLA3 sind in den Fig. 8a und 8b schematisch erläutert.

Das Service-Level-Agreement ist als eine Vereinbarung zwischen einem Anwender A und einem Provider P definiert.

Die Service-Level-Agreements werden über Web-Services WS zu den einzelnen Objekten bzw. Repräsentanten RC1, RC2, RC3 übertragen. Eine Anfrage bzw. Überprüfung der Service-Level-Agreements SLA1, SLA2, SLA3 erfolgt sodann in den jeweiligen Service-Level-Agreement-Einheiten SLAU der Repräsentanten RC1, RC2, RC3.

Hierzu ist anzumerken, dass Service-Level-Agreements SLA2, SLA2, SLA3 jederzeit geändert und über entsprechende Web-Services WS verteilt werden können. Wird ein Service-Level-Agreement SLA1, SLA2, SLA3 beim Generieren bzw. Verteilen der Steuerungs-Applikation bzw. Steuerungs-Teil-Applikation verletzt, so erfolgt eine Benachrichtigung des Anwenders, der dann für die Bereitstellung erweiterter Service-Level Agreements (SLAs) sorgen kann.

Nachfolgend sind Beispiele zu Service-Level-Agreements angegeben:
- SLA1:: "maximal 100 I/O-Punkte dürfen generiert werden".
- SLA2:: "wenn mehr als 100 MB Daten generiert werden, werden 15 % höhere Service-Gebühren erhoben"
- SLA3:: "SCADA und PLC1 und PLC2 dürfen nur gelesen werden"
- SLA4:: "SCADA und PLC3 und PLC4 dürfen gelesen und konfiguriert werden".
- SLA5:: "PLC4 darf nur mit PLC1 kommunizieren"

Aufgrund der Definition der einzelnen Service-Level-Agreements SLA1...SLA5 kann die Art der Nutzung der Repräsentanten innerhalb der cloud-basierten Umgebung CBE und die Interaktionen mit physischen Komponenten durch den Anwender gesteuert bzw. leistungsbezogen ermittelt und abgerechnet werden.

Unter dem Begriff "verteiltes Generieren" wird die Interaktion zwischen den Repräsentanten der physischen Komponenten in der cloud-basierten Umgebung verstanden, wobei u. a. ein Vergleich zwischen Parametern des einen Repräsentanten mit Parametern eines anderen Repräsentanten erfolgt. In diesem Zusammenhang werden auch sogenannte Cross-Referenz-Tabellen erzeugt, denen Variablen zugeordnet werden bzw. eine Logik eingeschrieben bzw. ausgelesen werden kann.

Die Interaktion zwischen den Repräsentanten beinhaltet auch die Definition von Parametern, den Entwurf von Steuerungs-Strategien, die Visualisierung einer Steuerungs-Logik sowie die Kompilierung der Applikation bzw. des Programms und anschließendes Laden der generierten Applikationen in die zugehörigen physischen Komponenten.

## Patentansprüche

1. Verfahren zur Generierung und Handhabung von Komponenten-Applikationen (CA1,...,CAn) für physische Komponenten (C1,...,Cn) wie programmierbare Steuerung (Programmable Logic Control (PLC)), Mensch-Maschine-Interface (Human Machine Interface (HMI)) und/oder Steuerungs-Überwachungs- und Datenerfassungs-Einheit (Supervisory Control and Data Aquisition (SCADA)) eines Steuerungssystems (CA), umfassend die Verfahrensschritte:
Bereitstellen von Komponenten-Funktionen (CF1,...,CFn) in Form von Objekttypen aus in einer Bibliothek (BIB) gespeicherten Komponenten-Modellen (CM1,...,CMn) bzw. Funktionsmodellen (FM1,...,FMn) mit definierten Referenzen und Parametersätzen für die zu verwendenden Komponenten-Funktionen (CF1,...,CFn) sowie deren Kommunikation, Logik und Variablen;
Auswahl von für eine Gesamt-Applikation spezifischen Komponenten-Funktionen (CF1,...,CFn),
**dadurch gekennzeichnet,**
**dass** kundenspezifische oder lizenzbasierte Funktionsumfänge in Form von Service-Level-Agreements (SLA1,...,SLAn) mit zugehörigen Funktions-Umfangs-Parametem (PSLA1,...,PSLAn) definiert werden,
**dass** aus den ausgewählten Komponenten-Funktionen (CF1,...,CFn) nach einer Verifizierung der definierten Service-Level-Agreements (SLA1,...,SLAn) Instanzen (ICF1,...,ICFn) erzeugt werden und eine Übergabe von Parametern (P1,...,Pn) einschließlich der für die Generierung der Komponenten-Applikationen relevanten Funktions-Umfangs-Parameter (PSLA,...,PSLAn) erfolgt,
**dass** die für die Generierung einer Gesamt-Applikation notwendigen Instanzen (ICF1,...,ICFn) als Repräsentanten (RC1,...,RCn) der Komponenten-Funktionen (F1,...,Fn) mittels einer Ressourcen-Verwaltung (RV) auf Ressourcen (CU1,...,CUn) einer cloud-basierten Umgebung verteilt und in dieser zur Ausführung implementiert werden,
**dass** die Generierung der Komponenten-Applikationen (CA1,...,CAn) in einem der Repräsentanten (RC1,...,RCn) in der cloud-basierten Umgebung (CBE) die Erzeugung von Parameter-Daten, Konfigurations-Daten und/oder Applikations-Logik in dem Repräsentanten umfasst, dass die Daten durch Interaktion zwischen den Repräsentanten (RC1,...,RCn) sowie zwischen den Repräsentanten (RC1,..., RCn) und der zugeordneten physischen Komponente (C1,...,Cn) unter Berücksichtigung der instantüerten Parametersätze und Referenzen der Repräsentanten ausgetauscht werden und dass die generierten Komponenten-Applikationen (CA1,...,CAn) in die physischen Komponenten (C1,...,Cn) geladen werden.

2. Verfahren nach Anspruch 1,
**dadurch gekennzeichnet,**
**dass** die Interaktionen zwischen den Repräsentanten (RC1,...,RCn) sowie zwischen den Repräsentanten (RC1,...,RCn) und den zugehörigen physikalischen Komponenten (C1....,Cn) durch die Service-Level-Agreements (SLA1,...,SLAn) gesteuert werden und /oder dass die Interaktionen zwischen den Repräsentanten (RC1,...,RCn) sowie zwischen den Repräsentanten und den zugehörigen physischen Komponenten (C1,...,Cn) durch die Service-Level-Agreements (SLA1,...,SLAn) aktiviert oder deaktiviert werden, und/oder dass die Interaktionen zwischen den Repräsentanten (RC1,...,RCn) die Definition und den Vergleich von Parametern, den Entwurf von Steuerungs-Strategien sowie die Visualisierung von Steuerungs-Logik umfassen, und/oder dass die Interaktionen zwischen den Repräsentanten (RC1,...,RCn) über einen einheitlichen Identifikator für Ressourcen (Uniform Ressource Identifier (URI)) erfolgen.

3. Verfahren nach zumindest einem der vorhergehenden Ansprüche,
**dadurch gekennzeichnet,**
**dass** die Generierung der Komponenten-Applikation in dem Repräsentanten (RC1,...,RCn) durch die Service-Level-Agreements (SLA1,...,SLAn) aktiviert oder deaktiviert und/oder überprüft wird.

4. Verfahren nach zumindest einem der vorhergehenden Ansprüche,
**dadurch gekennzeichnet,**
**dass** die Generierung der Komponenten-Applikation (CA1,...,CAn) bezogen auf die physische Komponente (C1,...,Cn) oder die Übertragung von generierten Daten auf die physische Komponente (C1,...,Cn) durch das Service-Level-Agreement (SLA1,...,SLAn) überprüft wird.

5. Verfahren nach zumindest einem der vorhergehenden Ansprüche,
**dadurch gekennzeichnet,**
**dass** die Nutzung der generierten Komponenten-Applikationen (CA1,...,CAn) durch Vergabe von Nutzerrechten bezüglich Funktionsumfang und Datenzugriff gesteuert wird.

6. Verfahren nach zumindest einem der vorhergehenden Ansprüche,
**dadurch gekennzeichnet,**
**dass** die Repräsentanten (RC1,...,RCn) in Form von Software-Bausteinen auf zumindest einer Hardware-Komponente (CU1,...,CUn) der cloud-basierten Umgebung gehostet werden.

7. Verfahren nach zumindest einem der vorhergehenden Ansprüche,
**dadurch gekennzeichnet,**
**dass** die generierten Komponenten-Applikationen (CA1,...,CAn) unter Berücksichtigung des Service-Level-Agreements (SLA1,...,SLAn) mittels der physischen Komponente (C1,...,Cn) in Form der Steuerungs-Überwachungs- und Datenerfassungs-Einheit auf die weiteren Komponenten (C1,...,Cn) des Steuerungssystems verteilt werden.

8. Verfahren nach zumindest einem der vorhergehenden Ansprüche,
**dadurch gekennzeichnet,**
**dass** die Generierung einer Komponenten-Applikation (CA1,...,CAn) folgende Verfahrensschritte umfasst:
- Anfrage/Überprüfung eines Service-Level-Agreements (SLA1,...,SLAn) zur Generierung einer Komponenten-Applikation (CA1,...,CAn) zwischen den Repräsentanten (RC1,...,RCn),
- Interaktion zwischen den Repräsentanten (RC1,...,RCn) auf der Basis von Web-Services (WS),
- Generierung einer Komponenten-Applikation (CA1,...,CAn) in dem Repräsentanten (RC1,...,RCn), wobei die Generierung durch eine interne Service-Level-Agreement-Einheit (SLAU) des jeweiligen Repräsentanten, (RC1,...,RCn) überprüft wird,
- Verteilung der Komponenten-Applikation (CA1,...,CAn) zu der zugeordneten physischen Komponente (C1,...,Cn), wobei zuvor gegebenenfalls durch die Service-Level-Agreement-Einheit (SLAU) eine Überprüfung durchgeführt wird.

9. Verfahren nach zumindest einem der vorhergehenden Ansprüche,
**dadurch gekennzeichnet,**
**dass** die Komponenten-Applikation innerhalb der Instanz eines Repräsentanten (RC1,...,RCn) durch Objekt-Repräsentanten (GCOUM, GLU, GCONFU, DEPU) generiert wird, wobei die Instanz eine Kommunikations-Parameter-Generierungseinheit zur Generierung von Kommunikations-Parametern, eine Applikations-Logik-Generierungseinheit zur Generierung von Applikations-Logik und/oder eine Konfigurations-Informations-Generierungseinheit zur Generierung von Konfigurations-Informationen aufweist.

10. Verfahren nach zumindest einem der vorhergehenden Ansprüche,
**dadurch gekennzeichnet,**
**dass** die Kommunikations-Parameter eine Variable, eine Baudrate oder einen Speicherplatz repräsentieren, dass die Applikations-Logik einen FunktionsBaustein, eine Eingangsvariable, einen Speicherplatz und/oder eine Ausgangsvariable und dass die Konfigurations-Information eine Farbe für einen Hintergrund oder eine Menüsprache darstellt.

11. Verfahren nach zumindest einem der vorhergehenden Ansprüche,
**dadurch gekennzeichnet,**
**dass** die Service-Level-Agreements für das Generieren der Komponenten-Applikation in einer Service-Level-Applikations-Einheit (SLAU) der Instanz des Repräsentanten definiert und überprüft werden und/oder dass die Service-Level-Agreement-Einheit (SLAU) die Interaktion der Objekt-Repräsentanten innerhalb des Repräsentanten sowie die Interaktion mit anderen Repräsentanten und/oder die Verteilung der generierten Komponenten-Applikation steuert.

12. Verfahren nach zumindest einem der vorhergehenden Ansprüche,
**dadurch gekennzeichnet,**
**dass** die Kommunikation über eine Schnittstelle über einen einheitlichen Indikator für Ressourcen (uniform resource identifier) erfolgt, der aus einer Zeichenfolge besteht, die zur Adressierung/Identifikation einer abstrakten oder physischen Ressource dient.

13. Verfahren nach zumindest einem der vorhergehenden Ansprüche,
**dadurch gekennzeichnet,**
**dass** die Komponenten-Applikationen (CA1,...,CAn) in der cloud-basierten Umgebung (CBE) parallel generiert werden.

14. Verfahren nach zumindest einem der vorhergehenden Ansprüche,
**dadurch gekennzeichnet,**
**dass** die durch die interne Service-Level-Agreement-Einheit (SLAU) autorisierten und freigegebenen Daten aus der Interaktion zwischen den Instanzen mit den projektierten Daten (D) bearbeitet werden und dass die für die jeweiligen physischen Komponenten (C1,...,Cn) notwendigen, ablauffähigen Applikationsanteile wie Programm-Sektion nach Standard IEC 61131-3 für SPS, mit entsprechenden Funktionsbausteinen und deren spezifischen Parametern erzeugt und verteilt werden und/oder dass die projektierten Daten und die durch Interaktion gewonnenen Informationen benutzt werden, um ablauffähige, für die Ziel-Komponente angepasste Programmteile zu kompilieren.

15. Engineering-System (ES) zur Generierung und Handhabung von Komponenten-Applikationen (CA1,...,CAn) für physikalische Komponenten (C1,...,Cn), umfassend Mittel zur Generierung von Instanzen (ICF1,...,ICFn) von Komponenten-Funktionen (CF1,...,CFn) der Komponenten (C1,...,Cn), wobei die Komponenten-Applikationen durch die Instanzen generiert werden und wobei das Engineering-System Mittel zum Laden der generierten Komponenten-Applikationen (CA1,...,CAn) in die physischen Komponenten (C1,...,Cn) aufweist,
**dadurch gekennzeichnet,**
**dass** die für die Generierung einer Gesamt-Applikation notwendigen Instanzen (ICF1,...,ICFn) als Repräsentanten (RC1,...,RCn) der Komponenten-Funktionen (CF1,...,CFn) mittels einer Ressourcen-Verwaltung (RV) auf Ressourcen (CU1,...,CUn) einer cloud-basierten Umgebung (CBU) verteilt und in diesen zur Ausführung implementiert sind, wobei jede der Instanzen (ICF1,...,ICFn) Objekt-Repräsentanten in Form von Kommunikations-Parameter-Generierungseinheit (CCOMU), Applikations-Logik-Generierungseinheit (GLU) und/oder Konfigurations-Informations-Generierungseinheit (GCONFU) zur Generierung der Komponenten-Applikation aufweist.

16. Engineering -System nach Anspruch 15,
**dadurch gekennzeichnet,**
**dass** die Instanz (ICF1,...,ICFn) eine Service-Level-Applikations-Einheit (SLAU) aufweist, in der Service-Level-Agreements für das Generieren der Komponenten-Applikation definiert und überprüft werden.

17. Engineering-System nach Anspruch 15 oder16,
**dadurch gekennzeichnet,**
**dass** die Objekt-Repräsentanten Schnittstellen zur Kommunikation über einen einheitlichen Identifikator für Ressourcen (uniform resource identifier) aufweisen.

## Claims

1. A method for generating and handling component applications (CA1,...,CAn) for physical components (C1,...,Cn) such as a programmable control (Programmable Logic Control (PLC)), a Human Machine Interface (HMI) and/or a Supervisory Control and Data Acquisition (SCADA) unit of a control system (CA), comprising the following process steps:
providing component functions (CF1,...,CFn) in the form of object types from component models (CM1,...,CMn) and/or functional models (FM1,...,FMn) stored in a library (BIB), with specific references and sets of parameters for the component functions (CF1,...,CFn) to be used, along with the communication, logic and variables thereof;
selecting component functions (CF1,...,CFn) that are specific to an application as a whole,
**characterized in,**
**that** customer-specific or license-based ranges of functions in the form of service level agreements (SLA1,...,SLAn) with assigned range of function parameters (PSLA1,...,PSLAn) are defined,
**that**, once the defined service level agreements (SLA1,...,SLAn) have been verified, instances (ICF1,...,ICFn) are generated from the selected component functions (CF1,...,CFn), and a transfer of parameters (P1,...,Pn), including the range of function parameter (PSLA,...,PSLAn) that is relevant to the generation of the component applications, takes place
**that** the instances (ICF1,...,ICFn) that are necessary for generating an application as a whole are distributed to resources (CU1,...,CUn) of a cloud-based environment as representatives (RC1,...,RCn) of the component functions (F1,...,Fn) by means of a resource management component (RV), and are implemented for execution therein,
**that** the generation of the component applications (CA1,...,CAn) in one of the representatives (RC1,...,RCn) in the cloud-based environment (CBE) comprises the generation of parameter data, configuration data and/or application logic in the representative, that the data are exchanged by means of interaction between the representatives (RC1,...,RCn) and between the representatives (RC1,...,RCn) and the assigned physical component (C1,...,Cn), taking into consideration the instantiated sets of parameters and references of the representatives, and that the generated component applications (CA1,...,CAn) are loaded onto the physical components (C1,...,Cn).

2. The method according to claim 1,
**characterized in,**
**that** the interactions between the representatives (RC1,...,RCn) and between the representatives (RC1,...,RCn) and the assigned physical components (C1,...,Cn) are controlled via the service level agreements (SLA1,...,SLAn) and/or the interactions between the representatives (RC1,...,RCn) as well as between the representatives and the assigned physical components (C1,...,Cn) are activated by the service level agreements (SLA1,...,SLAn), and/or the interactions between the representatives (RC1,...,RCn) comprise the definition and the comparison of parameters, the drafting of control strategies and the visualization of control logic, and/or the interactions between the representatives (RC1,...,RCn) take place by means of a uniform resource identifier (URI).

3. The method according to at least one of the preceding claims,
**characterized in,**
**that** the generation of the component application in the representative (RC1,...,RCn) is activated or deactivated via the service level agreements (SLA1,...,SLAn).

4. The method according to at least one of the preceding claims,
**characterized in,**
**that** the generation of the component application (CA1,...,CAn) referred to the physical component (C1,...,Cn) or the transfer of generated data to the physical component (C1,...,Cn) is verified via the service level agreement (SLA1,...,SLAn).

5. The method according to at least one of the preceding claims,
**characterized in,**
**that** the use of the generated component applications (CA1,...,CAn) is controlled by issuing user's rights with respect to the range of functions and access to data.

6. The method according to at least one of the preceding claims,
**characterized in,**
**that** the representatives (RC1,...,RCn) are hosted in the form of software building blocks on at least one hardware component (CU1,...,CUn) of the cloud-based environment.

7. The method according to at least one of the preceding claims,
**characterized in,**
**that** the generated component applications (CA1,...,CAn) are distributed by means of the physical component (C1,...,Cn) in the form of the supervisory control and data acquisition unit to the additional components (C1,...,Cn) of the control system, taking into consideration the service level agreement (SLA1,...,SLAn).

8. The method according to at least one of the preceding claims,
**characterized in,**
**that** the generation of a component application (CA1,...,CAn) comprises the following process steps:
- querying/verifying a service level agreement (SLA1,...,SLAn) for generating a component application (CA1,...,CAn) between the representatives (RC1,...,RCn),
- interaction between the representatives (RC1,...,RCn) on the basis of web services (WS),
- generating a component application (CA1,...,CAn) in the representative (RC1,...,RCn), wherein the generation is verified via an internal service level agreement unit (SLAU) of the relevant representative (RC1,...,RCn),
- distributing the component application (CA1,...,CAn) to the assigned physical component (C1,...,Cn), wherein a verification is optionally performed in advance via the service level agreement unit (SLAU).

9. The method according to at least one of the preceding claims,
**characterized in,**
**that** the component application within the instance of a representative (RC1,...,RCn) is generated by object representatives (GCOUM, GLU, GCONFU, DEPU), wherein the instance has a communications parameter generating unit for generating communications parameters, an application logic generating unit for generating application logic and/or a configuration information generating unit for generating configuration information.

10. The method according to at least one of the preceding claims,
**characterized in,**
**that** the communications parameter represents a variable, a baud rate or a storage location, that the application logic represents a functional building block, and input variable, a storage location and/or an output variable and that the configuration information represents a color for a background or a menu language.

11. The method according to at least one of the preceding claims,
**characterized in,**
**that** the service level agreements for generation of the component application are defined and verified in a service level application unit (SLAU) of the instance of the representative and/or that the service level agreement unit (SLAU) controls the interaction of the object representatives within the representative and the interaction with other representatives and/or the distribution of the generated component application.

12. The method according to at least one of the preceding claims,
**characterized in,**
**that** the communication takes place via an interface by means of a uniform resource identifier, which consists of a sequence of characters that is used for addressing/identifying an abstract or physical resource.

13. The method according to at least one of the preceding claims,
**characterized in,**
**that** the component applications (CA1,...,CAn) are generated in parallel in the cloud-based environment (CBE).

14. The method according to at least one of the preceding claims,
**characterized in,**
**that** the data from the interaction between the instances, which data are authorized and released via the internal service level agreement unit (SLAU), are processed with the projected data (D), and that the executable application parts that are required for the respective physical components (C1,...,Cn), such as the program section according to standard IEC 61131-3 for SPS, are generated with corresponding functional building blocks and the specific parameters thereof, and are then distributed, and/or that the projected data and the information obtained through interaction are used for compiling executable program parts that are adapted for the target component.

15. An engineering system (ES) for generating and handling component applications (CA1,...,CAn) for physical components (C1,...,Cn), comprising means for generating instances (ICF1,...,ICFn) of component functions (CF1,...,CFn) of the components (C1,...,Cn), wherein the component applications are generated by the instances and wherein the engineering system has means for loading the generated component applications (CA1,...,CAn) onto the physical components (C1,...,Cn),
**characterized in,**
**that** the instances (ICF1,...,ICFn) that are necessary for the generation of an application as a whole are distributed as representatives (RC1,...,RCn) of the component functions (CF1,...,CFn) by means of a resource management component (RV) to resources (CU1,...,CUn) of a cloud-based environment (CBU), and are implemented therein for execution, wherein each of the instances (ICF1,...,ICFn) has object representatives in the form of a communications parameter generating unit (CCOMU), an application logic generating unit (GLU) and/or a configuration information generating unit (GCONFU) for generating the component application.

16. The engineering system according to claim 15,
**characterized in,**
**that** the instance (ICF1,...,ICFn) has a service level application unit (SLAU), in which service level agreements for generating the component application are defined and verified.

17. The engineering system according to claim 15 or 16,
**characterized in,**
**that** the object representatives have interfaces for communication by means of a uniform resource identifier.

## Revendications

1. Procédé pour générer et manipuler des applications (CA1, ..., CAn) de composants physiques (C1, ..., Cn) tels qu'un automate programmable (Programmable Logic Control (PLC)), une interface homme-machine (Human Machine Interface (HMI)) et/ou un système de contrôle et d'acquisition des données (Supervisory Control and Data Aquisition (SCADA)) d'un système de commande (CA), comprenant les étapes suivantes :
Mise à disposition de fonctions de composants (CF1, ..., CFn) sous forme de types d'objet issus de modèles de composants (CM1, ..., CMn) enregistrés dans une bibliothèque (BIB) ou de modèles de fonction (FM1, ..., FMn) avec des références et des ensembles de paramètres définis pour les fonctions des composants devant être utilisées (CF1,..., CFn), ainsi que leurs communication, logique et variables ;
Choix des fonctions de composants (CF1, ..., CFn) spécifiques à une application complète,
**caractérisé en ce**
**que** les volumes de fonctionnalités spécifiques au client ou sous licence sont définies sous forme d'accords sur le niveau de service (Service-Level-Agreements) (SLA1, ..., SLAn) avec les paramètres de volume de fonctionnalité correspondants (PSLA1, ..., PSLAn),
**que** des instances (ICF1, ..., ICFn) sont générées à partir des fonctions de composants sélectionnées (CF1, ..., CFn) après vérification des accords sur le niveau de service définis (SLA1, ..., SLAn) et qu'il s'ensuit une transmission des paramètres (P1 Pn) y compris des paramètres de volume de fonctionnalité (PSLA, ..., PSLAn) pertinents pour la génération des applications de composants ,
**que** les instances (ICF1 ..., ICFn) requises pour la génération d'une application complète sont réparties en tant que représentants (RC1, ..., RCn) des fonctions de composants (F1, ..., Fn) sur les ressources (CU1, ..., CUn) d'un environnement Cloud à l'aide d'une gestion des ressources (RV), puis implémentées dans ce dernier pour être exécutées,
**que** la génération des applications de composants (CA1, ..., CAn) dans l'un des représentants (RC1, ..., RCn) de l'environnement Cloud (CBE) inclut dans le représentant la génération de données de paramètre, de données de configuration et/ou d'une logique d'applications, que les données sont échangées par interaction entre les représentants entre eux (RC1,..., RCn) ainsi qu'entre les représentants (RC1, ..., RCn) et les composants physiques associés (C1, ..., Cn) en tenant compte des jeux de paramètres et des références des représentants instanciés et que les applications de composants générées (CA1, ..., CAn) sont chargées dans les composants physiques (C1, ..., Cn).

2. Procédé selon la revendication 1,
**caractérisé en ce**
**que** les interactions entre les représentants entre eux (RC1, ..., RCn) ainsi qu'entre les représentants (RC1, ..., RCn) et les composants physiques correspondants (C1, ..., Cn) sont gérées par les accords sur le niveau de service (SLA1, ..., SLAn) et /ou que les interactions entre les représentants entre eux (RC1, ..., RCn) ainsi qu'entre les représentants et les composants physiques correspondants (C1,...,Cn) sont activées ou désactivées par les accords sur le niveau de service (SLA1 ..., SLAn), et/ou que les interactions entre les représentants (RC1, ..., RCn) comprennent la définition et la comparaison des paramètres, l'élaboration des stratégies de commande ainsi que la visualisation de la logique de commande, et/ou que les interactions entre les représentants (RC1, ..., RCn) se font par l'intermédiaire d'un identificateur de ressource uniforme (Uniform Ressource Identifier (URI)).

3. Procédé selon au moins l'une des revendications précédentes,
**caractérisé en ce**
**que** la génération de l'application de composants dans le représentant (RC1, ..., RCn) est activée ou désactivée et/ou contrôlée par les accords sur le niveau de service (SLA1, ..., SLAn).

4. Procédé selon au moins l'une des revendications précédentes,
**caractérisé en ce**
**que** la génération des applications (CA1, CAn) se référant aux composants physiques (C1,..., Cn) ou la transmission des données générées aux composants physiques (C1, ..., Cn) est contrôlée par l'accord sur le niveau de service (SLA1, ..., SLAn).

5. Procédé selon au moins l'une des revendications précédentes,
**caractérisé en ce**
**que** l'utilisation des applications de composants générées (CA1, ..., CAn) dépend de l'octroi de droits d'utilisation en matière de volume de fonctionnalité et d'accès aux données.

6. Procédé selon au moins l'une des revendications précédentes,
**caractérisé en ce**
**que** les représentants (RC1,..., RCn) sont hébergés sous forme de modules logiciels sur au moins un composant matériel (CU1, ..., CUn) de l'environnement Cloud.

7. Procédé selon au moins l'une des revendications précédentes,
**caractérisé en ce**
**que**, en tenant compte des accords sur le niveau de service (SLA1,..., SLAn), les applications de composants générées (CA1, ..., CAn) sont réparties sur les autres composants (C1, ..., Cn) du système de commande à l'aide des composants physiques (C1, ..., Cn) sous forme d'un système de contrôle et d'acquisition des données.

8. Procédé selon au moins l'une des revendications précédentes,
**caractérisé en ce**
**que** la génération d'une application de composants (CA1, ..., CAn) comprend les étapes suivantes :
- Demande/vérification d'un accord sur le niveau de service (SLA1, ..., SLAn) pour la génération d'une application de composants (CA1, ..., CAn) entre les représentants (RC 1, ..., RCn),
- Interaction entre les représentants (RC1, ..., RCn) sur la base de services Web (WS),
- Génération d'une application de composants (CA1, ..., CAn) dans le représentant (RC1, ..., RCn), sachant que la génération est contrôlée par une unité interne d'accord sur le niveau de service (SLAU) du représentant respectif (RC1, ..., RCn),
- Répartition de l'application de composants (CA1, ..., CAn) à la composante physique associée (C1, ..., Cn), sachant que, le cas échéant, une vérification aura été faite auparavant par l'unité d'accord sur le niveau de service (SLAU).

9. Procédé selon au moins l'une des revendications précédentes,
**caractérisé en ce**
**que** l'application de composants au sein de l'instance d'un représentant (RC1, ..., RCn) est générée par les représentants de l'objet (GCOUM, GLU, GCONFU, DEPU), sachant que l'instance comprend une unité de génération de paramètres de communication pour la génération de paramètres de communication, une unité de génération d'une logique d'applications pour la génération d'une logique d'applications et/ou une unité de génération d'informations de configuration pour la génération d'informations de configuration.

10. Procédé selon au moins l'une des revendications précédentes,
**caractérisé en ce**
**que** les paramètres de communication représentent une variable, une vitesse de transmission en bauds ou un espace mémoire, que la logique d'application représente un module de fonction, une variable d'entrée, un espace mémoire et/ou une variable de sortie et que l'information de configuration représente une couleur pour un arrière-plan ou une langue du menu.

11. Procédé selon au moins l'une des revendications précédentes,
**caractérisé en ce**
**que**, pour la génération de l'application des composants, les accords sur le niveau de service sont définis et contrôlés dans une unité d'application du niveau de service (SLAU) de l'instance du représentant et/ou que l'unité d'accord sur le niveau de service (SLAU) gère l'interaction des représentants de l'objet au sein du représentant ainsi que l'interaction avec d'autres représentants et/ou la répartition de l'application de composants générée.

12. Procédé selon au moins l'une des revendications précédentes,
**caractérisé en ce**
**que** la communication se fait par une interface via un identificateur de ressource uniforme (uniform resource identifier), lequel est constitué d'une chaîne de caractères servant à l'adressage/identification d'une ressource abstraite ou physique.

13. Procédé selon au moins l'une des revendications précédentes,
**caractérisé en ce**
**que** les applications de composants (CA1, ..., CAn) sont générées en parallèle dans l'environnement Cloud (CBE).

14. Procédé selon au moins l'une des revendications précédentes,
**caractérisé en ce**
**que** les données autorisées et validées par l'unité interne d'accord sur le niveau de service (SLAU) sont traitées à l'aide des données élaborées (D) à partir de l'interaction entre les instances et que les parts d'application exécutables requises pour les composants physiques respectifs (C1, ..., Cn), telles qu'une section de programme selon la norme CEI 61131-3 relative aux automates programmables (PLC), sont générées et réparties avec les modules de fonction correspondants et leurs paramètres spécifiques et/ou que les données élaborées et les informations obtenues grâce à l'interaction sont utilisées pour compiler les parts de programme exécutables et adaptées au composant cible.

15. Système d'ingénierie (ES) pour générer et manipuler des applications de composants (CA1,...,CAn) pour composants physiques (C1, ..., Cn), comprenant des moyens pour générer des instances (ICF1, ..., ICFn) de fonctions (CF1, ..., CFn) des composants (C1, ..., Cn), sachant que les applications de composants sont générées par les instances et que le système d'ingénierie comprend des moyens de chargement des applications de composants générées (CA1,..., CAn) dans les composants physiques (C1, ..., Cn),
**caractérisé en ce**
**que**, à l'aide d'une gestion de ressources (RV), les instances (ICF1, ..., ICFn) requises pour la génération d'une application complète en tant que représentants (RC1, ..., RCn) des fonctions de composants (CF1, ..., CFn) sont réparties sur les ressources (CU1, ..., CUn) d'un environnement Cloud (CBU), puis implémentées dans celles-ci pour exécution, sachant que chaque instance (ICF1, ..., ICFn) comprend des représentants de l'objet sous forme d'une unité de génération de paramètres de communication (CCOMU), d'une unité de génération de logique d'applications (GLU) et/ou d'une unité de génération d'informations de configuration (GCONFU) pour la génération d'une application de composants.

16. Système d'ingénierie selon la revendication 15,
**caractérisé en ce**
**que** l'instance (ICF1, ..., ICFn) comprend une unité d'application du niveau de service (SLAU), dans laquelle sont définis et contrôlés les accords sur le niveau de service pour la génération de l'application de composants.

17. Système d'ingénierie selon la revendication 15 ou 16,
**caractérisé en ce**
**que** les représentants de l'objet comprennent des interfaces pour communiquer via un identificateur de ressource uniforme (uniform resource identifier).
